# FASCICULE DE BREVET EUROPEEN

(11) **EP 1 641 091 B1**
(45) Date de publication et mention de la délivrance du brevet: **21.04.2010**
(21) Numéro de dépôt: 05356144.5
(22) Date de dépôt: 02.09.2005
(51) Int. Cl.: H01R 43/14, B23Q 1/62, B23Q 17/12

(54) **Procède permettant d'usiner in situ la surface périphérique d'une pièce rotative, et dispositif permettant de mettre en oeuvre ledit procède**
Verfahren zum in-situ-Bearbeiten der Mantelfläche eines Drehteils und Vorrichtung zur Durchführung des Verfahrens
Method allowing the in-situ machining of the peripheral surface of a rotational workpiece and device facilitating the method

(30) Priorité: 07.09.2004 FR 0409431
(43) Date de publication de la demande: 29.03.2006
(73) Titulaire: Carbone Lorraine Applications Electriques, 80080 Amiens (FR)
(72) Inventeur: Ovaere, Peter, 1780 Wemmel (BE); Becquet, Yvon, 80260 Poulainville (FR)
(74) Mandataire: Radault, Gabrielle

(56) Documents cités:
- EP-A- 0 962 281
- EP-A- 1 127 657
- WO-A-00/16945
- PATENT ABSTRACTS OF JAPAN vol. 1995, no. 11, 26 décembre 1995 (1995-12-26) -& JP 07 214402 A (HITACHI BUILDING SYST ENG & SERVICE CO LTD), 15 août 1995 (1995-08-15)

## Description

### DOMAINE TECHNIQUE

L'invention concerne l'usinage sur site (sur machine et en usine) de pièces tournantes, plus particulièrement la rénovation sans démontage des collecteurs ou des bagues qui sont fixés respectivement à l'induit ou au rotor des moteurs électriques et que nous appellerons par la suite "contacts rotatifs".

### ETAT DE LA TECHNIQUE

L'invention a été développée plus particulièrement dans le but de rénover les surfaces des collecteurs ou des bagues qui, soumises au frottement des balais qui assurent un contact électrique glissant, ont développé un défaut de circularité périphérique. On constate en effet que ces contacts rotatifs n'ont plus, après une certaine durée de fonctionnement du moteur, un rayon uniforme sur toute leur périphérie. Pour prolonger la durée de vie des contacts rotatifs, limiter l'usure des balais et enrayer les vibrations mécaniques, on effectue une réparation par rectification par abrasion, typiquement "à la pierre" à la meule, ou encore par usinage, de la surface dégradée.

Une telle réparation est généralement une opération coûteuse qui immobilise le moteur pendant une longue durée. Avec les méthodes traditionnelles, l'intervention entraîne un arrêt de la machine pendant un temps variable suivant la puissance et les dimensions du moteur électrique et en fonction des difficultés rencontrées. La durée d'un tel arrêt est typiquement comprise entre quelques jours et plusieurs mois. L'opération complète de rectification comprend le désaccouplement du moteur et de sa charge mécanique, la dépose du moteur et son transport vers un atelier dûment équipé où s'effectue la réparation proprement dite. En général, pour les moteurs puissants, le collecteur est renvoyé au fournisseur pour réusinage. Ceci présente plusieurs inconvénients: d'une part, il faut prévoir un stock de moteurs en réserve que l'on fera fonctionner pendant la durée de réparation des moteurs démontés; d'autre part, le remontage nécessite une attention particulière pour effectuer un réalignement délicat des axes collecteur/induit ou bague/rotor.

Afin d'éviter ces difficultés, on effectue la réparation "in situ" des contacts rotatifs, c'est-à-dire en atelier et sans démontage de la partie supportant la surface de contact à rectifier. Typiquement, les moteurs concernés par ce type de rénovation "in situ" sont des moteurs électriques de puissance supérieure à 3.5 kW, en pratique pouvant atteindre 650 MW. Pour effectuer la réparation "in situ", on enlève les accessoires tels que certains balais et leurs supports pour accéder à la surface à rectifier et on utilise un dispositif comprenant un bâti, qui est à monter sur la partie statique du moteur, des moyens de fixation et de chariotage d'un outil d'abrasion ou d'usinage et un moyen auxiliaire pour entraîner le moteur et mettre ainsi en rotation le contact rotatif à réparer, ce moyen pouvant être par exemple un moteur auxiliaire. La combinaison du mouvement de rotation du contact rotatif et des déplacements axiaux de l'outil réalisés à l'aide du moyen de chariotage assure une rectification de la surface dégradée du contact rotatif. La rectification peut se faire par abrasion ou meulage ou encore, comme décrit dans WO00/16945, par usinage.

WO00/16945 décrit un procédé de rectification par usinage in situ des contacts rotatifs de machines électriques dans lequel on utilise un outil de coupe de dureté très élevée, typiquement en diamant, et incliné de façon particulière par rapport à la normale à la surface à rectifier passant par ledit contact et dans lequel les copeaux sont évacués par aspiration à proximité de la pastille de l'outil.

JP 7-214 402 décrit l'état de la technique le plus proche. Ce document montre un procédé selon le préambule de la revendication 1 ainsi qu'un dispositif d'usinage selon le préambule de la revendication 14.

### PROBLEME POSE

Pour avoir accès à la surface du contact rotatif à rectifier, on enlève par exemple une des rangées de porte-balais, munis de balais assurant le contact électrique glissant entre rotor et stator. La surface à rectifier se trouve dans une configuration spatiale particulière, en raison des parties voisines du moteur qui n'ont pas été démontées. Sur une extrémité du collecteur par exemple, on trouve la partie du rotor comprenant le bobinage et les fils ou barres de connexion du collecteur. Sur l'autre extrémité se trouvent souvent des accessoires mécaniques statiques tels qu'une paroi de la carcasse du moteur, le palier ou encore des accessoires de porte-balais. La surface de contact du collecteur se présente donc comme le fond d'une surface globalement concave avec, aux extrémités de ladite surface à rectifier, des parois perpendiculaires à l'axe de rotation qui présentent une hauteur radiale importante. En particulier lorsque la rectification est réalisée par usinage, il est souhaitable que l'outil de rectification soit maintenu avec une distance entre son support et son extrémité active aussi courte que possible, de façon à éviter les vibrations, du moins à réduire au minimum leur amplitude. Dans ce cas, il est nécessaire de faire se déplacer le porte-outil à l'intérieur de l'espace délimité par cette surface globalement concave. Or la présence de ces parois à l'une et/ou l'autre extrémité du collecteur ne permet pas, en raison de l'encombrement des pièces servant à maintenir l'outil de coupe, d'usiner avec un seul outil la surface du collecteur sur toute sa longueur utile. De plus, les extrémités doivent souvent être chanfreinées.

Il s'agit donc de trouver une solution technique rapide permettant une rénovation de la surface dégradée du collecteur sur toute sa longueur utile, ladite longueur utile étant supérieure au déplacement maximal de chariotage du porte-outil.

### DESCRIPTION DE L'INVENTION

Un premier objet de l'invention est un procédé d'usinage in situ , c'est-à-dire sans démontage préalable de la pièce à usiner, de la surface périphérique d'une pièce rotative, en particulier le collecteur ou la bague d'un moteur électrique (que nous désignerons par la suite sous le terme commun "contact rotatif"), tournant autour d'un axe xx' solidaire d'un bâti, en particulier le bâti dudit moteur électrique, dans lequel on utilise un dispositif d'usinage comprenant au moins une platine solidaire dudit bâti et un porte-outil muni d'un outil coupant et monté sur ladite platine de sorte qu'il peut se déplacer suivant une direction YY' sensiblement perpendiculaire à l'axe de rotation xx' du contact rotatif (direction appelée par la suite "direction de plongée"), ledit porte-outil étant également monté sur ladite platine de telle sorte qu'il peut pivoter autour d'un axe orienté suivant une direction ZZ' sensiblement perpendiculaire à la direction de plongée YY' et à l'axe de rotation xx' de la pièce rotative caractérisé en ce que, en combinant une rotation du porte-outil autour de l'axe ZZ' et une translation suivant la direction de plongée YY' du centre de rotation autour de ZZ', on impose à l'extrémité active de l'outil coupant un déplacement dans un plan perpendiculaire à l'axe ZZ' tel que la trajectoire de ladite extrémité active de l'outil coupant comprend au moins une partie rectiligne parallèle à l'axe de rotation xx'.

En effet, de façon à rectifier la surface du contact rotatif, la composante suivant xx' du déplacement imposé à l'extrémité de l'outil de coupe n'est pas nulle et se traduit par une trajectoire qui comprend au moins une partie rectiligne parallèle à l'axe de rotation xx'.

Les axes YY' et ZZ' ainsi que l'axe XX' perpendiculaire au plan formé par les axes précédents sont des axes liés au dispositif d'usinage alors que l'axe xx' est lié à la pièce rotative. Le dispositif d'usinage est composé de plusieurs pièces mobiles entre elles , au moins une platine et un porte-outil. Le référentiel XX', YY', ZZ' est défini sur la platine. Le porte-outil peut se déplacer suivant la direction YY' de la platine et est monté sur ladite platine de telle sorte que son axe de rotation reste parallèle à ZZ'. Pour que le porte-outil se déplace suivant YY', la platine, solidaire du bâti, est par exemple munie d'une première glissière orientée suivant sa direction YY' et le porte-outil est muni d'un premier coulisseau dont la section est de forme complémentaire à celle de la première glissière. Bien évidemment, la première glissière située sur la platine et le premier coulisseau situé sur le porte-outil sont des moyens de guidage de formes complémentaires interchangeables, arrangés de telle sorte que l'axe de rotation du porte-outil coïncide avec l'axe ZZ'.

La platine est solidaire du bâti en ce sens qu'elle peut soit être fixée directement sur ledit bâti, soit se déplacer par rapport au bâti par simple translation dans son plan XX', YY' en coulissant sur une semelle fixée sur ledit bâti. De préférence, elle coulisse en suivant la direction XX' qui, par montage (la platine a été montée de telle sorte que son axe YY' est sensiblement perpendiculaire à l'axe de rotation xx' de la pièce rotative) est sensiblement parallèle (à plus ou moins quelques degrés) à l'axe de rotation xx' de la pièce rotative et correspond donc à une direction de chariotage.

L'axe XX' n'est pas obligatoirement un axe de déplacement de la platine puisque le chariotage peut être assuré, au moins en partie, par la combinaison des mouvements de rotation du porte-outil autour de ZZ' et du déplacement suivant YY' du centre de rotation. Qu'il y ait ou non chariotage de la platine et du porte-outil suivant la direction XX', il peut exister un décalage angulaire entre les axes xx' et XX', qui doit être corrigé pour que la trajectoire de l'extrémité de l'outil de coupe corresponde à l'usinage voulu. Cette correction nécessite quelques mesures de calage préalables effectuées une fois pour toutes après le montage du dispositif: l'angle entre XX' et xx' peut être directement mesuré par exemple par visées laser ou encore estimé en mesurant les distances entre le contact rotatif et l'outil en deux emplacements, de préférence aussi éloignés que possible sur l'axe XX' et choisis de telle sorte qu'ils permettent des mesures à partir de surfaces tournées non usées de la pièce rotative.

Si le dispositif d'usinage est employé pour rectifier la surface usée d'un contact rotatif, la trajectoire imposée à l'extrémité de l'outil de coupe peut être simplement rectiligne, parallèle à xx', mais elle peut avoir une forme plane différente: en général, dans le cas des collecteurs, la rectification nécessite une étape supplémentaire de cassage des angles saillants des lames du collecteur. Il convient alors de réaliser des chanfreins aux extrémités de la surface à usiner, sur les arêtes des lames de collecteur, sur une distance comprise typiquement entre 4 et 8 millimètres.

De préférence, le pivotement imposé au porte-outil est symétrique par rapport au plan formé par les axes YY' et ZZ', c'est-à-dire qu'il se traduit par une rotation entre un angle - α et un angle + α par rapport à la direction de plongée YY', l'angle α étant typiquement inférieur à 60°. Si la trajectoire visée de l'extrémité active de l'outil coupant est une droite parallèle à l'axe de rotation xx', l'amplitude angulaire 2α est définie de telle sorte que le déplacement recherché pour l'extrémité de l'outil de coupe suivant la direction xx' corresponde sensiblement à la longueur 2Rsinαde la corde de l'arc décrit par l'extrémité active de l'outil en rotation par rapport à ZZ', R étant la distance entre l'extrémité active de l'outil de coupe et le centre C de la rotation de l'outil par rapport à ZZ'. Pour obtenir une trajectoire rectiligne parallèle à l'axe XX' perpendiculaire à YY' et ZZ', on impose au porte-outil, simultanément à une rotation d'angle β par rapport à ZZ,' un mouvement suivant la direction de plongée YY' tel que le centre de rotation C se déplace d'une longueur sensiblement égale R (1-cosβ). Si XX' et xx' coïncident, cette trajectoire rectiligne de l'outil permet de rectifier la partie cylindrique de la surface du contact rotatif. Comme indiqué précédemment, une correction doit être faite pour tenir compte d'un éventuel décalage angulaire entre xx' et XX'.

De préférence, le déplacement suivant la direction de plongée YY' du centre de rotation autour de ZZ' et la rotation du porte-outil autour de l'axe ZZ' sont motorisés, par exemple, à l'aide d'un moteur assurant, via un montage de type vis - écrou, le déplacement du porte-outil le long de la première glissière (direction YY') et d'un moteur assurant la rotation du porte-outil autour de l'axe ZZ'. Les mouvements ainsi motorisés peuvent être commandés à l'aide d'un programme d'ordinateur de telle sorte que l'on obtienne, par combinaison desdits mouvements, la trajectoire recherchée. De plus, ces mouvements peuvent être asservis pour améliorer, en cours de coupe, les paramètres d'usinage.

Pour des raisons d'encombrement, l'axe de rotation ZZ' du porte-outil peut être virtuel, c'est-à-dire non matérialisé par un arbre autour duquel pivote le porte-outil. Le porte-outil peut, comme dans l'exemple présenté ci-après, être composé des deux parties mobiles l'une par rapport à l'autre:
- une base pouvant se déplacer suivant YY' et munie d'un engrenage en arc de cercle dans un plan parallèle à (XX', YY') et au moins d'une rainure en forme d'arc de cercle concentrique à celui de l'engrenage;
- un porte-plaquette, qui porte la plaquette d'usinage en une de ses extrémités, qui est muni d'une part d'une roue crantée qui, en appui sur l'engrenage de la base et qui, tournant sur elle-même, suit en un mouvement planétaire une trajectoire en arc de cercle et d'autre part au moins d'une protubérance parallèle à l'axe ZZ' qui coulisse dans la rainure en arc de cercle de la base.
La rotation de la roue crantée peut être motorisée. Le maintien en appui de l'outil au cours de la coupe et de la roue crantée sur l'engrenage est assuré par une ou plusieurs protubérances qui sont orientées parallèlement à ZZ' et qui coulissent dans une rainure en arc de cercle concentrique à l'arc de l'engrenage.

Comme la surface à usiner peut avoir une longueur importante, il est avantageux que la platine ne soit pas fixée directement sur un point fixe du bâti mais sur une semelle fixée sur le dit bâti. La semelle est elle-même munie d'une deuxième glissière orientée dans une direction XX' sensiblement parallèle à l'axe de rotation xx' de la pièce rotative et la platine est munie d'un deuxième coulisseau dont la section est de forme complémentaire à celle de la deuxième glissière. La platine est ainsi montée sur la semelle de sorte ,qu'elle peut se déplacer dans la direction XX' de la deuxième glissière. De la sorte, on peut imposer un déplacement plan à l'extrémité active de l'outil coupant en combinant une rotation du porte-outil autour de l'axe ZZ', une translation suivant la direction de plongée YY' du centre de rotation autour de ZZ', et une translation de la platine dans la direction de chariotage XX'.

La longueur de la semelle peut être définie de telle sorte que, si L est la longueur de la surface à rectifier, l'amplitude H du chariotage de la platine est au moins égale à L - 2 R sin α0, 2α0 étant l'amplitude maximale de l'angle de rotation du porte-outil autour de l'axe ZZ'.

Comme nous l'avons vu précédemment, l'asservissement de l'axe YY' permet également de compenser les défauts de parallélisme entre l'axe du collecteur xx' et la direction de chariotage XX'. Toutefois, cette correction ne peut être que limitée et plus la longueur de chariotage est grande, plus le besoin d'un bon alignement entre les axes xx' et XX' se fait sentir. Typiquement, pour une longueur de surface à rectifier de l'ordre de 600 mm, il est préférable de viser un angle entre xx' et XX' aussi faible que possible, typiquement inférieur à 1°.

Comme indiqué précédemment pour la platine et le porte-outil, le déplacement de la platine (chariotage suivant XX') est également de préférence motorisé. Par exemple, la semelle est munie d'un moteur qui assure, via un montage de type vis - écrou, le déplacement de la platine le long de la deuxième glissière. Les mouvements ainsi motorisés peuvent être commandés à l'aide d'un programme d'ordinateur de telle sorte que l'on obtienne, par combinaison desdits mouvements, la trajectoire recherchée.

De plus, ces mouvements peuvent être asservis simultanément pour améliorer, en cours de coupe, les paramètres d'usinage. La trajectoire complète de l'outil d'usinage peut être définie d'une part en fonction de données géométriques relatives à la surface à usiner et de données géométriques relatives aux positions de départ et de fin d'usinage imposées à l'outil de coupe et d'autre part en fonction des réactions de la pièce rotative (variations de sa vitesse de rotation et vibrations) qui sont mesurées en continu. Ainsi, la trajectoire complète de l'outil peut être modifiée en cours d'usinage, en fonction des contraintes imposées à l'outil et à la pièce rotative.

Avec un tel dispositif, le procédé d'usinage selon l'invention peut être avantageusement mis en oeuvre de façon automatique si les mouvements asservis sont pilotés par ordinateur. Le logiciel permettant de piloter l'usinage comprend deux parties principales:
a) une interface avec l'utilisateur: le logiciel communique à l'écran avec l'utilisateur sur la base d'un questionnement automatique simple, de telle sorte qu'il ne soit pas nécessaire d'être spécialiste. L'utilisateur introduit les positions de « départ » et de « fin » imposées à l'outil, par exemple à l'aide d'un joystick. Pour rectifier la surface d'un contact rotatif, il introduit également le diamètre de la pièce à tourner pour compléter les informations nécessaires à la programmation.
b) un logiciel de programmation qui calcule la trajectoire à imposer à l'extrémité de l'outil en fonction des données fournies par l'utilisateur et des réactions de l'outillage mesurées en continu au cours de l'usinage; ledit logiciel commande des moyens motorisés pour effectuer automatiquement les déplacements le long des axes XX', YY' et la rotation autour de l'axe ZZ'.

La trajectoire calculée comprend une trajectoire d'entrée depuis une position située de façon sûre hors de la zone occupée par la pièce rotative en rotation jusqu'à un point d'entrée proche de la surface à usiner, une "trajectoire de travail" comprenant plusieurs passes d'usinage, la dernière étant appelée passe de finition, et une trajectoire de sortie permettant de placer l'outil à une position située de façon sûre hors de la pièce rotative en rotation. La "trajectoire de travail" est définie au fur et à mesure, en fonction de certains paramètres liés à la qualité de coupe, dont la mesure peut entraîner la modification de l'avance d'usinage, donc le nombre et la forme des trajectoires des passes intermédiaires. De préférence, la passe de finition est déclenchée automatiquement lorsqu'une mesure physique permet de s'assurer qu'il y a un contact permanent entre l'outil de coupe et la surface à rectifier. Pour ce faire, on peut équiper l'extrémité de l'outil, typiquement une pointe de coupe diamant, de sorte qu'elle puisse émettre un signal à l'ordinateur indiquant qu'elle est en contact continu sur toute la surface de la pièce à travailler.

Par exemple, la vitesse de rotation de la pièce tournante autour de xx' est contrôlée en permanence par un capteur. En cas de variation de vitesse, la programmation est réadaptée en continu. Ainsi, une baisse de la vitesse de rotation, résultant d'une avance trop forte est corrigée automatiquement en diminuant l'avance suivant XX', qui elle-même influence la vitesse de rotation autour de ZZ' et la correction du déplacement du centre de rotation suivant YY'.

Pour obtenir le signal indiquant qu'il y a un contact permanent entre l'outil de coupe et la surface à rectifier, on peut par exemple établir un circuit électrique entre le contact rotatif et l'outil de coupe, en isolant électriquement ce dernier du bâti. En portant le contact rotatif et l'outil de coupe à des potentiels différents, un courant s'établit dans ce circuit dès que l'outil de coupe entre en contact avec la surface à rectifier. Par contre, le courant s'annule dès que l'outil n'est plus en contact avec la surface à rectifier. Si un courant circule en permanence dans ce circuit pendant toute la durée de la passe d'usinage, c'est qu'il y a contact permanent et on peut donc terminer l'usinage avec la passe de finition.

La qualité de l'usinage peut être vérifiée en permanence à l'aide d'un capteur de vibrations. En établissant au préalable des essais de coupe avec des paramètres d'usinage différents (avance suivant XX', vitesse de rotation, etc...), on enregistre les vibrations engendrées suivant ces conditions que l'on corrèle avec la qualité d'usinage obtenue dans ces conditions, évaluée par exemple par une rugosité moyenne Ra. On établit ainsi une relation entre les vibrations engendrées (par exemples leurs amplitudes et/ou leurs fréquences) et la qualité d'usinage. Sur la base de cette relation, on définit un seuil ou plusieurs seuils d'alarme. Si au cours d'un usinage, le niveau des vibrations mesurées devient supérieur au plus faible de ces seuils, le système prévient l'utilisateur. Après cette « phase d'alarme », si le niveau de vibration augmente encore et dépasse un seuil encore plus élevé, l'outil de coupe est automatiquement retiré de la zone de travail: l'usinage est arrêté et une procédure de reprise est proposée à l'utilisateur en fonction des critères relevés.

Un autre objet selon l'invention est un dispositif d'usinage de la surface périphérique d'une pièce rotative, en particulier le collecteur ou la bague d'un moteur électrique, tournant autour d'un axe xx' solidaire d'un bâti, en particulier le bâti dudit moteur électrique, ledit dispositif comprenant au moins une platine destinée à être rendue solidaire d'un point fixe dudit bâti et un porte-outil muni d'un outil coupant et monté sur ladite platine de sorte qu'il peut se déplacer dans une direction YY' sensiblement perpendiculaire à xx', ledit porte-outil étant également monté sur la platine de telle sorte qu'il peut pivoter autour d'un axe orienté suivant une direction ZZ' sensiblement perpendiculaire à direction YY' et à l'axe de rotation xx' du contact rotatif. Le dispositif selon l'invention est caractérisé en ce que, pour des raisons d'encombrement, l'axe de rotation ZZ' du porte-outil est virtuel, c'est-à-dire non matérialisé par un arbre autour duquel pivote le porte-outil. Pour ce faire, le porte-outil est composé des deux parties mobiles l'une par rapport à l'autre:
- une base pouvant se déplacer suivant YY' et munie d'un engrenage en arc de cercle dans un plan parallèle à (XX', YY') et au moins d'une rainure en forme d'arc de cercle concentrique à celui de l'engrenage;
- un porte-plaquette, qui porte la plaquette d'usinage en une de ses extrémités, qui est muni d'une part d'une roue crantée qui, en appui sur l'engrenage de la base et tournant sur elle-même, suit en un mouvement planétaire une trajectoire en arc de cercle et d'autre part au moins d'une protubérance parallèle à l'axe ZZ' qui coulisse dans la rainure en arc de cercle de la base.

Pour que le porte-outil se déplace suivant YY', la platine, solidaire du bâti, est par exemple munie d'une première glissière orientée suivant la direction YY' et le porte-outil est muni d'un premier coulisseau dont la section est de forme complémentaire à celle de la première glissière. Bien évidemment, la première glissière située sur la platine et le premier coulisseau situé sur le porte-outil sont des moyens de guidage de formes complémentaires interchangeables, arrangés de telle sorte que l'axe de rotation du porte-outil coïncide avec l'axe ZZ'.

La rotation de la roue crantée peut être motorisée. Le maintien en appui de l'outil au cours de la coupe et de la roue crantée sur l'engrenage est assuré par une ou plusieurs protubérances qui sont orientées parallèlement à ZZ' et qui coulissent dans une rainure en arc de cercle concentrique à l'arc de l'engrenage.

De préférence, le pivotement imposé au porte-outil est symétrique par rapport au plan formé par les axes YY' et ZZ', c'est-à-dire qu'il se traduit par une rotation entre un angle - α et un angle + α par rapport à la direction YY', l'angle α étant typiquement inférieur à 60°.

De préférence, la platine n'est pas fixée directement sur un point fixe du bâti mais sur une semelle fixée sur ledit bâti. La semelle est elle-même munie d'une deuxième glissière orientée dans une direction XX' qui doit être placée dans une direction sensiblement parallèle à l'axe de rotation xx' de la pièce rotative et la platine est munie d'un deuxième coulisseau dont la section est de forme complémentaire à celle de la deuxième glissière. La platine est ainsi montée sur la semelle de sorte qu'elle peut se déplacer dans la direction XX' de la deuxième glissière. La semelle peut être en une ou en plusieurs parties, à condition que la deuxième glissière reste parfaitement rectiligne et assure un déplacement sans à-coups de la platine.

Le chariotage suivant XX' de la platine est de préférence motorisé. Par exemple, la semelle est munie d'un moteur qui assure, via un montage de type vis - écrou, le déplacement de la platine le long de la deuxième glissière. Les mouvements ainsi motorisés peuvent être commandés à l'aide d'un programme d'ordinateur de telle sorte que l'on obtienne, par combinaison desdits mouvements, la trajectoire recherchée.

Le porte-outil est conçu de façon à ne pas être tributaire du sens de rotation de la pièce tournante (on peut le fixer en haut et en bas).

### DESCRIPTION BREVE DES FIGURES

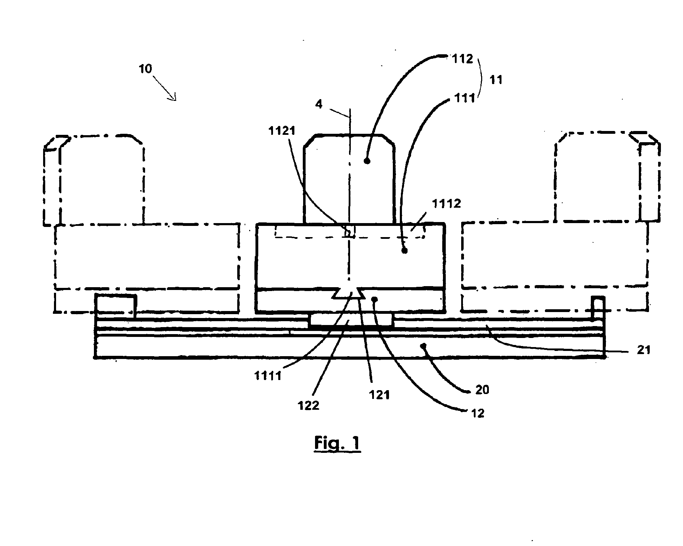

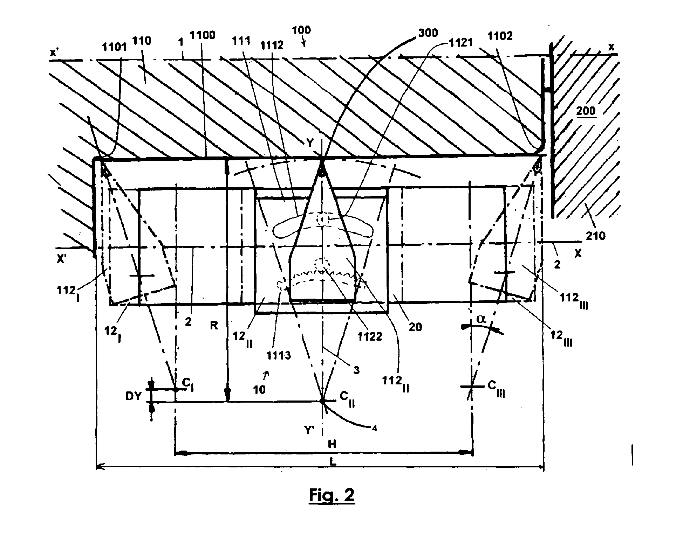

Les figure 1 et 2 illustrent, respectivement en vue de face et en vue de dessus, un dispositif d'usinage selon l'invention permettant de rectifier in situ la surface de contacts rotatifs de moteurs électriques avec, présentées en traits mixtes, les configurations spatiales extrêmes de la platine et du porte-outil.

### DESCRIPTION DETAILLEE D'UN MODE DE RÉALISATION DE L'INVENTION

Le dispositif d'usinage présenté dans cet exemple comprend deux parties: une semelle (20) solidaire du bâti du moteur (non représenté), et un ensemble platine + porte-outil (10). Le porte-outil (11) est muni en son extrémité d'une pastille d'usinage (300) de dureté élevée, typiquement supérieure à 10 sur l'échelle de Mohs, par exemple en diamant. Le porte-outil comprend deux pièces mobiles l'une part rapport à l'autre:
- une base (111) pouvant se déplacer suivant YY' et munie d'un engrenage (1113) en arc de cercle dans un plan parallèle à (XX', YY') et d'une rainure (1112) en forme d'arc de cercle concentrique à celui de l'engrenage;
- un porte-plaquette (112), qui porte la plaquette d'usinage (300) en une de ses extrémités, qui est muni d'une part d'une roue crantée (1122) qui, en appui sur l'engrenage (1113) de la base et tournant sur elle-même, suit en un mouvement planétaire une trajectoire en arc de cercle et d'autre part d'une protubérance (1121) parallèle à l'axe ZZ' qui coulisse dans la rainure (1112) en arc de cercle de la base.

En fonction de la puissance du moteur électrique, le diamètre de la surface du collecteur à rectifier varie typiquement de 100 à 6000 mm. Pour avoir accès à la surface du contact rotatif à rectifier, on a enlevé une rangée de porte-balais munis de balais assurant le contact électrique glissant entre le rotor (100) et le stator (200). La surface du collecteur (110) à rectifier se trouve dans une configuration spatiale particulière en raison des parties du moteur voisines qui n'ont pas été démontées. Sur l'extrémité gauche du collecteur, on trouve la partie du rotor (120) qui comprend le bobinage et les fils de connecteurs. Sur l'autre extrémité se trouvent un palier (210). La surface de contact du collecteur se trouve donc au fond d'une surface globalement convexe avec, aux extrémités de ladite surface à rectifier, des parois perpendiculaires à l'axe de rotation xx' qui présentent une hauteur radiale importante. Les extrémités de la surface du collecteur (110) à rectifier doivent de plus être chanfreinées (chanfreins 1101 et 1102).

L'ensemble forme une zone concave difficilement accessible avec un seul outil. La zone à rectifier s'étend sur une longueur égale à environ 300mm. En raison de l'encombrement du dispositif de chariotage et de l'épaisseur même du porte-outil, chaque extrémité de cette zone ne peut pas être atteinte par l'outil de coupe sur 50 mm environ.

La semelle (20) est rendue solidaire du bâti du moteur par fixation sur l'une des poutres de support des porte-balais. Elle est munie d'une deuxième glissière (21) orientée suivant la direction XX' sensiblement parallèle à l'axe de rotation xx' du contact rotatif. La platine (12) est munie d'un deuxième coulisseau (122) dont la section est de forme complémentaire à celle de la deuxième glissière (21). Par l'intermédiaire de la semelle (20), la platine (12) est solidaire du bâti du moteur électrique. La semelle (20) est munie d'un moteur électrique qui assure, via un montage de type vis - écrou, le déplacement de la platine (12) le long de la deuxième glissière (21).

La platine est également munie d'une première glissière (121) orientée suivant une direction YY' sensiblement perpendiculaire à l'axe de rotation xx'. La base (111) du porte-outil (11) est munie d'un premier coulisseau (1111) dont la section est de forme complémentaire à celle de la première glissière (121). Le déplacement suivant la direction de plongée YY' est motorisé à l'aide d'un moteur électrique assurant, via un montage de type vis - écrou.

Grâce à la roue crantée (1122) qui, en appui sur l'engrenage (1113) de la base et tournant sur elle-même, suit en un mouvement planétaire une trajectoire en arc de cercle, le porte-plaquette (112) peut pivoter autour d'un axe orienté suivant une direction ZZ' (4) sensiblement perpendiculaire à direction de plongée YY' et à l'axe de rotation xx' du contact rotatif. La rotation de la roue crantée motorisée à l'aide d'un moteur électrique. Le maintien de l'outil de coupe (300) au cours de la coupe et de la roue crantée en appui sur l'engrenage est assuré par la protubérance (1121) du porte-plaquette (112) qui coulisse dans la rainure en arc de cercle (1112) ménagée dans la base (111). La protubérance (1121) est orientée suivant l'axe ZZ' et la rainure en arc de cercle (1112) a été usinée de telle sorte que la protubérance peut glisser en appui sur la paroi de la rainure en restant parallèle à l'axe ZZ'.

Les différents moteurs associés aux axes XX', YY' et ZZ' fonctionnent de telle sorte que l'extrémité active de l'outil coupant (300) suit une trajectoire imposée dans un plan perpendiculaire à ZZ'. De préférence, cette trajectoire comporte au moins une partie rectiligne parallèle à xx' pour assurer la rectification de surfaces cylindriques.

Le pivotement imposé au porte-plaquette est symétrique par rapport au plan formé par les axes YY' et ZZ': partant de l'angle - α (origine des angles YY', sens des aiguilles d'une montre) dans la position extrême de gauche du dispositif, le manchon pivote autour de ZZ' jusqu'à atteindre l'angle + α dans la position extrême de droite. L'angle α est ici voisin de 17°.

La distance R du centre de rotation C (point virtuel, situé en dehors du porte-outil) à l'extrémité de l'outil est d'environ 170mm. Ainsi, le mouvement combiné translation suivant YY' + rotation autour de ZZ' du porte-outil permet d'allonger la course de chariotage de près de 100 mm. Lorsque l'outil est incliné à 17.1 ° (positions aux extrémités), la correction à apporter sur la position du centre C de rotation consiste à le rapprocher de l'axe xx' de 7.5 mm (DY) environ.

La semelle (20) est fixée sur une barre porte-balai (non représentée). Elle est ici interchangeable en fonction de la longueur du collecteur, qui dans la pratique peut varier de 80 à 600 mm.

L'usinage est effectué automatiquement à l'aide d'un programme d'ordinateur. La vitesse de rotation du contact rotatif est contrôlée en permanence par une sonde. En cas de variation de vitesse, la programmation est réadaptée en continu. L'extrémité de l'outil, typiquement une pointe de coupe diamant, émet un signal en permanence à l'ordinateur. Dès qu'elle est en contact continu sur toute la surface de la pièce à travailler, la passe de finition est effectuée.

### NOMENCLATURE

- 1: axe de rotation xx'
- 2: direction de chariotage XX'
- 3: direction de plongée YY'
- 4: axe de rotation du porte outil
- C: centre de rotation du porte-outil
(C_{I}) position extrême gauche; (C_{II}) position centrale; (C_{III}) position extrême droite
- 10: ensemble platine + porte-outil
- 11: porte-outil
- 111: base du porte-outil
- 1111: premier coulisseau
- 1112: rainure en arc de cercle
- 1113: engrenage en arc de cercle
- 112: porte-plaquette
(112_{I}) position extrême gauche; (112_{II}) position centrale; (112_{III}) position extrême droite
- 1121: protubérance
- 1122: roue crantée
- 12: platine
(12_{I}) position extrême gauche; (12_{II}) position centrale; (12_{III}) position extrême droite
- 121: première glissière
- 122: deuxième coulisseau
- 20: semelle
- 21: deuxième glissière
- 100: rotor
- 110: collecteur
- 1100: surface à rectifier
- 1101: chanfrein sur arête de lame de collecteur
- 1102: chanfrein sur arête de lame de collecteur

- 120: partie du rotor comprenant le bobinage et des fils de connecteurs
- 200: stator
- 210: palier
- 300: pastille d'usinage
- R: distance entre l'extrémité active de la pastille d'usinage et le centre de rotation du porte-plaquette
- H: course maxi de la base
- L: longueur de la surface à rectifier
- α: angle de rotation du porte-plaquette autour de ZZ'
- DY: déplacement imposé au centre de rotation entre la position médiane (I) et une position extrême

## Revendications

1. Procédé d'usinage in situ de la surface périphérique (1100) d'une pièce rotative, en particulier le collecteur ou la bague d'un moteur électrique, tournant autour d'un axe xx' (1) solidaire d'un bâti, en particulier le bâti dudit moteur électrique, dans lequel on utilise un dispositif d'usinage comprenant au moins une platine (12) solidaire dudit bâti et un porte-outil (11) muni d'un outil coupant (300) et monté sur ladite platine de sorte qu'il peut se déplacer suivant une direction YY' (3) sensiblement perpendiculaire à l'axe de rotation xx' (1), ledit porte-outil étant également monté sur ladite platine de telle sorte qu'il peut pivoter autour d'un axe orienté suivant une direction ZZ' (4) sensiblement perpendiculaire à la direction YY' et à l'axe de rotation xx', ledit procédé étant **caractérisé en ce que**, en combinant une rotation du porte-outil autour de l'axe ZZ' et une translation suivant la direction de plongée YY' du centre de rotation (C) autour de ZZ', on impose à l'extrémité active de l'outil coupant (300) un déplacement dans un plan perpendiculaire à l'axe ZZ' tel que la trajectoire de ladite extrémité active de l'outil coupant comprend au moins une partie rectiligne parallèle à l'axe de rotation xx'.

2. Procédé d'usinage selon la revendication 1 dans lequel ladite trajectoire imposée comprend aux extrémités de ladite partie rectiligne deux autres portions rectilignes inclinées par rapport à la première et destinées à chanfreiner les extrémités (1101, 1102) de la surface à usiner (1100).

3. Procédé d'usinage selon la revendication 1 ou 2 dans lequel le pivotement imposé au porte-outil (11; 112) est symétrique par rapport au plan formé par les axes YY' (3) et ZZ' (4), se traduisant par une rotation entre un angle - α et un angle + α par rapport à la direction de plongée YY', l'angle α étant typiquement inférieur à 60°.

4. Procédé d'usinage selon l'une quelconque des revendications 1 à 3 dans lequel le déplacement suivant la direction de plongée YY' (3) du centre de rotation (C) autour de ZZ' et la rotation du porte-outil autour de l'axe ZZ' sont motorisés et commandés à l'aide d'un programme d'ordinateur de telle sorte que l'on obtienne, par combinaison desdits mouvements, la trajectoire recherchée.

5. Procédé d'usinage selon l'une quelconque des revendications 1 à 4 dans lequel on impose un déplacement plan à l'extrémité active de l'outil coupant (300) en combinant une rotation du porte-outil (11) autour de l'axe ZZ', une translation suivant la direction de plongée YY' du centre de rotation autour de ZZ', et une translation de la platine (12) dans la direction de chariotage XX'.

6. Procédé d'usinage selon la revendication 5 dans lequel le déplacement suivant la direction de plongée YY' (3) du centre de rotation (C) autour de ZZ', la rotation du porte-outil autour de l'axe ZZ' et le déplacement suivant la direction XX' (2) de la platine sont motorisés et commandés à l'aide d'un programme d'ordinateur de telle sorte que l'on obtienne, par combinaison desdits mouvements, la trajectoire recherchée.

7. Procédé d'usinage selon la revendication 6 dans lequel le déplacement suivant la direction de plongée YY' (3) du centre de rotation (C) autour de ZZ', la rotation du porte-outil autour de l'axe ZZ' et le déplacement suivant la direction XX' (2) de la platine sont asservis pour améliorer en cours de coupe les paramètres d'usinage.

8. Procédé d'usinage selon la revendication 7 dans lequel les mouvements asservis sont pilotés par ordinateur, le logiciel permettant de piloter l'usinage comprenant:
a) une interface avec l'utilisateur grâce à laquelle le logiciel communique à l'écran avec l'utilisateur, sur la base d'un questionnement automatique simple, introduit au moins les positions de « départ » et de « fin » imposées à l'outil, ainsi que le diamètre de la pièce à rectifier;
b) un logiciel de programmation qui calcule la trajectoire à imposer à l'extrémité de l'outil en fonction des données fournies par l'utilisateur et des réactions de l'outillage mesurées en continu au cours de l'usinage, ledit logiciel commandant des moyens motorisés pour effectuer automatiquement les déplacements le long des axes XX', YY' et la rotation autour de l'axe ZZ'.

9. Procédé d'usinage selon la revendication 8 dans lequel la vitesse de rotation de la pièce tournante autour de l'axe xx' est contrôlée en permanence par un capteur de telle sorte qu'en cas de variation de ladite vitesse, la programmation, est réadaptée aussitôt.

10. Procédé d'usinage selon la revendication 8 ou 9 dans lequel on équipe l'extrémité de l'outil, typiquement une pointe de coupe diamant, de sorte qu'elle puisse émettre un signal à l'ordinateur indiquant qu'elle est en contact continu sur toute la surface de la pièce à travailler.

11. Procédé d'usinage selon l'une quelconque des revendications 1 à 10 dans lequel la qualité de la coupe est contrôlée en continu à l'aide d'un capteur de vibrations.

12. Procédé d'usinage selon la revendication 11 dans lequel on réalise au préalable des essais de coupe avec des paramètres d'usinage différents de façon à établir une rotation entre les vibrations engendrées et la qualité d'usinage obtenue, et dans lequel, sur la base de ladite relation, un dispositif d'alarme est mis en oeuvre dès qu'un niveau de vibrations élevé est mesuré.

13. Procédé d'usinage selon la revendication 12 dans lequel l'outil de coupe est automatiquement retiré de la zone de travail dès qu'un niveau critique de vibrations est atteint.

14. Dispositif d'usinage de la surface (1100) périphérique d'une pièce rotative, en particulier la collecteur ou la bague d'un moteur électrique, tournant autour d'un axe xx' (1) solidaire d'un bâti, en particulier le bâti dudit moteur électrique, ledit dispositif comprenant au moins une platine (12) destinée à être rendue solidaire d'un point fixe dudit bâti et un porte-outil (11) muni d'un outil coupant (300) et monté sur ladite platine de sorte qu'il peut se déplacer dans une direction YY' (3) sensiblement perpendiculaire à xx', ledit porte-outil étant également monté sur la platine de telle sorte qu'il peut pivoter autour d'un axe orienté suivant une direction ZZ' (4) sensiblement perpendiculaire à direction YY' et à l'axe de rotation xx' du contact rotatif, ledit dispositif étant **caractérisé en ce que** le porte-outil (11) est composé des deux parties mobiles l'une par rapport à l'autre:
• une base (111) pouvant se déplacer suivant YY' et munie d'un engrenage (1113) en arc de cercle dans un plan parallèle à un plan contenant l'axe (xx') et la direction (yy') et au moins d'une rainure (1112) en forme d'arc de cercle concentrique à celui de l'engrenage;
• un porte-plaquette (112), qui porte la plaquette d'usinage (300) en une de ses extrémités, qui est muni d'une part d'une roue crantée (1122) qui, en appui sur l'engrenage (1113) de la base et tournant sur elle-même, suit en un mouvement planétaire une trajectoire en arc de cercle et d'autre part au moins d'une protubérance (1121) parallèle à l'axe ZZ' qui coulisse dans la rainure (1112) en arc de cercle de la base..

15. Dispositif d'usinage selon la revendication 14 dans lequel la platine (12), solidaire du bâti, est munie d'une première glissière (121) orientée suivant la direction YY' et le porte-outil (11) est muni d'un premier coulisseau (1111) dont la section est de forme complémentaire à celle de la première glissière.

16. Dispositif d'usinage selon la revendication 14 ou 15 dans lequel le porte-outil (11; 112) peut pivoter de façon symétrique par rapport au plan formé par les axes YY' (3) et ZZ' (4), entre un angle - α et un angle + α par rapport à la direction YY', l'angle α étant typiquement inférieur à 60°.

17. Dispositif d'usinage selon l'une quelconque des revendications 14 à 16 dans lequel le déplacement suivant la direction YY' (3) du centre de rotation (C) autour de ZZ' et la rotation du porte-outil (11) autour de l'axe ZZ' sont motorisés.

18. Dispositif d'usinage selon l'une quelconque des revendications 14 à 17 **caractérisé en ce qu'**il comprend également une semelle (20) devant être fixée sur une partie fixe du stator du moteur électrique et sur laquelle est montée la platine (12) de telle sorte que ladite platine peut se déplacer suivant une direction XX' (2) sensiblement parallèle à l'axe de rotation xx' (1) de la pièce rotative.

19. Dispositif selon la revendication 18 dans lequel ladite semelle (20) est munie d'une deuxième glissière (21) orientée dans une direction XX' (2) sensiblement parallèle à l'axe de rotation xx' (1) de la pièce rotative, la platine (12) étant munie d'un deuxième coulisseau (122) dont la section est de forme complémentaire à celle de la deuxième glissière de telle sorte qu'elle peut se déplacer dans la direction XX' (2) de la deuxième glissière (21).

20. Dispositif selon la revendication 18 ou 19 dans lequel le déplacement suivant la direction YY' (3) du centre de rotation (C) autour de ZZ', la rotation du porte-outil (11) autour de l'axe ZZ' et le déplacement suivant la direction XX' (2) de la platine (12) sont réalisés à l'aide de moteurs.

21. Dispositif selon la revendication 20 **caractérisé en ce que** lesdits moteurs sont commandés simultanément, par exemple à l'aide d'un programme d'ordinateur, pour imposer à l'extrémité de l'outil de coupe (300) la trajectoire voulue.

## Claims

1. Method for machining in situ the peripheral surface (1100) of a rotary part, in particular the commutator or the ring of an electric motor, rotating about an axis xx' (1) secured to a frame, in particular the frame of said electric motor, in which a machining device is used comprising at least one plate (12) secured to the said frame and a tool-holder (11) furnished with a cutting tool (300) and mounted on the said plate so that it can move in a direction YY' (3) substantially perpendicular to the axis of rotation xx' (1), the said tool-holder also being mounted on the said plate so that it can pivot about an axis oriented in a direction ZZ' (4) substantially perpendicular to the direction YY' and to the axis of rotation xx', the said method being **characterized in that**, by combining a rotation of the tool-holder about the axis ZZ' and a translation in the direction of infeed YY' of the centre of rotation (C) about ZZ', the active end of the cutting tool (300) is made to move in a plane perpendicular to the axis ZZ' such that the trajectory of the said active end of the cutting tool comprises at least a rectilinear portion parallel to the axis of rotation xx'.

2. Machining method according to Claim 1, in which the said imposed trajectory comprises, at the ends of the said rectilinear portion, two other rectilinear portions inclined relative to the first and designed to champfer the ends (1101, 1102) of the surface to be machined (1100).

3. Machining method according to Claim 1 or 2, in which the pivoting imposed on the tool-holder (11; 112) is symmetrical relative to the plane formed by the axes YY' (3) and ZZ' (4), resulting in a rotation between an angle - α and an angle + α relative to the direction of infeed YY', the angle α being typically less than 60°.

4. Machining method according to any one of Claims 1 to 3, in which the movement in the direction of infeed YY' (3) of the centre of rotation (C) about ZZ' and the rotation of the tool-holder about the axis ZZ' are motorized and controlled with the aid of a computer program so that, by combination of the said movements, the desired trajectory is obtained.

5. Machining method according to any one of Claims 1 to 4, in which a flat movement of the active end of the cutting tool (300) is imposed by combining a rotation of the tool-holder (11) about the axis ZZ', a translation in the direction of infeed YY' of the centre of rotation about ZZ', and a translation of the plate (12) in the direction of turning XX'.

6. Machining method according to Claim 5, in which the movement in the direction of infeed YY' (3) of the centre of rotation (C) about ZZ', the rotation of the tool-holder about the axis ZZ' and the movement in the direction XX' (2) of the plate are motorized and controlled with the aid of a computer program so that, by combination of the said movements, the desired trajectory is obtained.

7. Machining method according to Claim 6, in which the movement in the direction of infeed YY' (3) of the centre of rotation (C) about ZZ', the rotation of the tool-holder about the axis ZZ' and the movement in the direction XX' (2) of the plate are controlled in order to improve the machining parameters during cutting.

8. Machining method according to Claim 7, in which the controlled movements are computer-driven, the software making it possible to drive the machining comprising:
a) an interface with the user by virtue of which the software communicates on the screen with the user, on the basis of a simple automatic questioning, inserts at least the "start" and "end" positions imposed on the tool, and the diameter of the part to be ground;
b) a software program which computes the trajectory to be imposed on the end of the tool according to the data supplied by the user and the reactions of the tool measured continuously during machining, the said software controlling the motorized means for automatically making the movements along the axes XX', YY' and the rotation about the axis ZZ'.

9. Machining method according to Claim 8, in which the speed of rotation of the rotating part about the axis xx' is constantly monitored by a sensor so that, if there is a variation of the said speed, the programming is immediately readapted.

10. Machining method according to Claim 8 or 9, in which the end of the tool, typically a diamond cutting tip, is equipped so that it can transmit a signal to the computer indicating that it is in continuous contact over the whole surface of the part to be worked.

11. Machining method according to any one of Claims 1 to 10, in which the quality of cut is continuously monitored with the aid of a vibration sensor.

12. Machining method according to Claim 11, in which cutting tests are carried out beforehand with different machining parameters so as to establish a relationship between the vibrations generated and the quality of machining obtained, and in which, on the basis of the said relationship, an alarm device is applied as soon as a high vibration level is measured.

13. Machining method according to Claim 12, in which the cutting tool is automatically withdrawn from the working zone as soon as a critical level of vibrations is reached.

14. Device for machining the peripheral surface (1100) of a rotary part, in particular the commutator or the ring of an electric motor, rotating about an axis xx' (1) secured to a frame, in particular the frame of the said electric motor, the said device comprising at least one plate (12) designed to be secured to a fixed point of the said frame and a tool-holder (11) furnished with a cutting tool (300) and mounted on the said plate so that it can move in a direction YY' (3) substantially perpendicular to xx', the said tool-holder also being mounted on the plate so that it can pivot about an axis oriented in a direction ZZ' (4) substantially perpendicular to the direction YY' and to the axis of rotation xx' of rotary contact, the said device being **characterized in that** the tool-holder (11) consists of two portions that can move relative to one another:
• a base (111) that can move in the direction YY' and furnished with a gear (1113) in an arc of a circle in a plane parallel to a plane containing the axis (xx') and the direction (YY') and at least one groove (1112) in the form of an arc of a circle concentric with that of the gear;
• a cutting-metal holder (112), which holds the machining cutting metal (300) at one of its ends, which is furnished on the one hand with a notched wheel (1122) which, resting on the gear (1113) of the base and rotating on itself, follows in a planetary movement a trajectory in an arc of a circle and, on the other hand, with at least one protuberance (1121) parallel to the axis ZZ' which slides in the groove (1112) in an arc of a circle of the base.

15. Machining device according to Claim 14, in which the plate (12), secured to the frame, is furnished with a first slide (121) oriented in the direction YY' and the tool-holder (11) is furnished with a first traveller (1111) the section of which is of a shape to match that of the first slide.

16. Machining device according to Claim 14 or 15 in which the tool-holder (11; 112) can pivot symmetrically relative to the plane formed by the axes YY' (3) and ZZ' (4), between an angle - α and an angle + α relative to the direction YY', the angle α being typically less than 60°.

17. Machining device according to any one of Claims 14 to 16, in which the movement in the direction YY' (3) of the centre of rotation (C) about ZZ' and the rotation of the tool-holder (11) about the axis ZZ' are motorized.

18. Machining device according to any one of Claims 14 to 17, **characterized in that** it also comprises a shoe (20) designed to be fixed to a fixed portion of the stator of the electric motor and on which the plate (12) is mounted so that the said plate can move in a direction XX' (2) substantially parallel to the axis of rotation xx' (1) of the rotating part.

19. Device according to Claim 18, in which the said shoe (20) is furnished with a second slide (21) oriented in a direction XX' (2) substantially parallel to the axis of rotation xx' (1) of the rotating part, the plate (12) being furnished with a second traveller (122) the section of which is of a shape to match that of the second slide so that it can move in the direction XX' (2) of the second slide (21).

20. Device according to Claim 18 or 19, in which the movement in the direction YY' (3) of the centre of rotation (C) about ZZ', the rotation of the tool-holder (11) about the axis ZZ' and the movement in the direction XX' (2) of the plate (12) are carried out with the aid of motors.

21. Device according to Claim 20, **characterized in that** the said motors are controlled simultaneously, for example with the aid of a computer program, in order to impose the desired trajectory on the end of the cutting tool (300).

## Patentansprüche

1. Verfahren zur Vorortbearbeitung der Umfangsfläche (1100) eines Drehteils, insbesondere des Kollektors oder des Rings eines Elektromotors, das sich um eine Achse xx' (1) dreht, die mit einem Ständer verbunden ist, insbesondere dem Ständer des Elektromotors,
wobei eine Bearbeitungsvorrichtung verwendet wird, die zumindest eine Platte (12), die mit dem Ständer verbunden ist, und einen Werkzeugträger (11) enthält, der mit einem Schneidwerkzeug (300) versehen und an der Platte so angebracht ist, dass er sich entlang einer Richtung YY' (3) bewegen kann, die im wesentlichen senkrecht zu der Drehachse xx' (1) ist,
wobei der Werkzeugträger an der Platte auch so angebracht ist, dass er um eine Achse schwenken kann, die entlang einer Richtung ZZ' (4) ausgerichtet ist, die im wesentlichen senkrecht zu der Richtung YY' und zu der Drehachse xx' ist,
wobei das Verfahren **dadurch gekennzeichnet ist, dass**
durch Kombination einer Drehung des Werkzeugträgers um die Achse ZZ' und einer Translation entlang der Tauchrichtung YY' des Drehzentrums (C) um ZZ' dem aktiven Ende des Schneidwerkzeugs (300) eine Bewegung in einer zu der Achse ZZ' senkrechten Ebene dergestalt auferlegt wird, dass die Bahn des aktiven Endes des Schneidwerkzeugs zumindest einen geradlinigen Abschnitt enthält, der parallel zu der Drehachse xx' ist.

2. Bearbeitungsverfahren gemäß Anspruch 1, bei dem die auferlegte Bahn an den Enden des geradlinigen Abschnitts zwei weitere geradlinige Abschnitte enthält, die relativ zu dem ersten geneigt sind und dazu bestimmt sind, die Enden (1101, 1102) der zu bearbeitenden Oberfläche (1100) abzufasen.

3. Bearbeitungsverfahren gemäß Anspruch 1 oder 2, bei dem die dem Werkzeugträger (11; 112) auferlegte Schwenkung symmetrisch zu der Ebene ist, die durch die Achsen YY' (3) und ZZ' (4) gebildet ist, was sich in einer Drehung zwischen einem Winkel -α und einem Winkel +α gegenüber der Tauchrichtung YY' äußert, wobei der Winkel typischerweise kleiner als 60 Grad ist.

4. Bearbeitungsverfahren gemäß einem der Ansprüche 1 bis 3, bei dem die Bewegung entlang der Tauchrichtung YY' (3) des Drehzentrums (C) um ZZ' und die Drehung des Werkzeugträgers um die Achse ZZ' motorisiert und mittels eines Rechnerprogramms so gesteuert sind, dass durch Kombination dieser Bewegungen die gewünschte Bahn erzielt wird.

5. Bearbeitungsverfahren gemäß einem der Ansprüche 1 bis 4, bei dem dem aktiven Ende des Schneidwerkzeugs (300) eine ebene Bewegung auferlegt wird, indem eine Drehung des Werkzeugträgers (11) um die Achse ZZ', eine Translation entlang der Tauchrichtung YY' des Drehzentrums um ZZ' und eine Translation der Platte (12) in der Vorschubrichtung XX' kombiniert werden.

6. Bearbeitungsverfahren gemäß Anspruch 5, bei dem die Bewegung entlang der Tauchrichtung YY' (3) des Drehzentrums (C) um ZZ', die Drehung des Werkzeugträgers um die Achse ZZ' und die Bewegung in der Richtung XX' (2) der Platte motorisiert und mittels eines Rechnerprogramms so gesteuert sind, dass durch Kombination dieser Bewegungen die gewünschte Bahn erzielt wird.

7. Bearbeitungsverfahren gemäß Anspruch 6, bei dem die Bewegung entlang der Tauchrichtung YY' (3) des Drehzentrums (C) um ZZ', die Drehung des Werkzeugträgers um die Achse ZZ' und die Bewegung in der Richtung XX' (2) der Platte nachgeführt sind, um die Bearbeitungsparameter im Verlauf des Schneidens zu verbessern.

8. Bearbeitungsverfahren gemäß Anspruch 7, bei dem die nachgeführten Bewegungen rechnergesteuert sind, wobei die Software, die die Bearbeitungssteuerung ermöglicht, enthält:
a) eine Benutzerschnittstelle, dank derer die Software über einen Bildschirm mit dem Benutzer kommuniziert auf der Basis einer automatischen einfachen Befragung, die zumindest die dem Werkzeug auferlegte Start- und Endposition sowie den Durchmesser des nachzubearbeitenden Teils einführt,
b) eine Programmiersoftware, die die dem Ende des Werkzeugs aufzuerlegende Bahn abhängig von vom Benutzer gelieferten Daten und von kontinuierlich im Verlauf der Bearbeitung gemessenen Reaktionen des Werkzeugs berechnet, wobei die Software motorisierte Mittel steuert, um automatisch die Bewegungen entlang der Achsen XX', YY' und die Drehung um die Achse ZZ' zu bewirken.

9. Bearbeitungsverfahren gemäß Anspruch 8, bei dem die Geschwindigkeit der Drehung des Drehteils um die Achse xx' ständig über einen Sensor kontrolliert wird, so dass im Fall einer Änderung dieser Geschwindigkeit auch die Programmierung wieder adaptiert wird.

10. Bearbeitungsverfahren gemäß Anspruch 8 oder 9, bei dem das Ende des Werkzeugs, typischerweise eine Diamantschneidspitze, so ausgestattet ist, dass sie ein Signal an den Rechner abgeben kann, das anzeigt, dass sie mit der gesamten Oberfläche des zu bearbeitenden Teils in kontinuierlichem Kontakt ist.

11. Bearbeitungsverfahren gemäß einem der Ansprüche 1 bis 10, bei dem die Schnittqualität kontinuierlich mittels eines Vibrationssensors kontrolliert wird.

12. Bearbeitungsverfahren gemäß Anspruch 11, bei dem im Voraus Probeschnitte mit unterschiedlichen Bearbeitungsparametern verwirklicht werden, um eine Beziehung zwischen den erzeugten Vibrationen und der erhaltenen Bearbeitungsqualität aufzustellen, und bei dem auf der Basis dieser Beziehung eine Alarmvorrichtung in Betrieb gesetzt wird, sobald ein erhöhter Vibrationspegel gemessen wird.

13. Bearbeitungsverfahren gemäß Anspruch 12, bei dem das Schneidwerkzeug automatisch aus dem Arbeitsbereich zurückgezogen wird, sobald ein kritischer Vibrationspegel erreicht wird.

14. Vorrichtung zum Bearbeiten der Umfangsfläche (1100) eines Drehteils, insbesondere des Kollektors oder des Rings eines Elektromotors, das sich um eine Achse xx' (1) dreht, die mit einem Ständer verbunden ist, insbesondere dem Ständer des Elektromotors,
wobei die Vorrichtung zumindest eine Platte (12), die dazu bestimmt ist, mit einem festen Punkt des Ständers verbunden zu werden, und einen Werkzeugträger (11) enthält, der mit einem Schneidwerkzeug (300) versehen und so an der Platte angebracht ist, dass er sich entlang einer Richtung YY' (3) bewegen kann, die im wesentlichen senkrecht zu xx' ist,
wobei der Werkzeugträger an der Platte auch so angebracht ist, dass er um eine Achse schwenken kann, die entlang einer Richtung ZZ' (4) ausgerichtet ist, die im wesentlichen senkrecht zu der Richtung YY' und der Drehachse xx' des Drehkontakts ist,
wobei die Vorrichtung **dadurch gekennzeichnet ist, dass** der Werkzeugträger (11) aus zwei Teilen zusammengesetzt ist, die relativ zu einander beweglich sind:
einer Basis (111), die sich entlang YY' bewegen kann und versehen ist mit einer Verzahnung (1113) in Form eines Kreisbogens in einer Ebene, die parallel zu einer ebene ist, die die Achse xx' und die Richtung YY'enthält, und zumindest einer Rille (1112) in Form eines Kreisbogens, der konzentrisch zu dem der Verzahnung ist;
einem Plättchenhalter (112), der das Bearbeitungsplättchen (300) an einem seiner Enden hält und der einerseits mit einem Zahnrad (1122) versehen ist, das in Anlage an die Verzahnung (1113) der Basis und sich um sich selbst drehend in einer Planetenbewegung einer kreisbogenförmigen Bahn folgt, und andererseits mit zumindest einem Vorsprung (1121), der parallel zu der Achse ZZ' ist und in der kreisbogenförmigen Rille (1112) der Basis gleitet.

15. Bearbeitungsvorrichtung gemäß Anspruch 14, bei der die Platte (12), die mit dem Ständer verbunden ist, mit einer ersten Gleitschiene (121) versehen ist, die entlang der Richtung YY' ausgerichtet ist, und der Werkzeugträger (11) mit einem ersten Gleitelement (1111) versehen ist, dessen Querschnitt eine zu derjenigen der ersten Gleitschiene komplementäre Form aufweist.

16. Bearbeitungsvorrichtung gemäß Anspruch 14 oder 15, bei der der Werkzeugträger (11; 112) symmetrisch zu der Ebene schwenken kann, die durch die Achsen YY' (3) und ZZ' (4) gebildet ist, zwischen einem Winkel (-α) und einem Winkel (+α) zu der Richtung YY', wobei der Winkel typischerweise kleiner als 60 Grad ist.

17. Bearbeitungsvorrichtung gemäß einem der Ansprüche 14 bis 16, bei der die Bewegung entlang der Richtung YY' (3) des Drehzentrums (C) um ZZ' und die Drehung des Werkzeugträgers (11) um die Achse ZZ' motorisiert sind.

18. Bearbeitungsvorrichtung gemäß einem der Ansprüche 14 bis 17, **dadurch gekennzeichnet, dass** sie auch eine Sohle (20) enthält, die an einem festen Abschnitt des Stators des Elektromotors befestigt werden muss und an der die Platte (12) so angebracht ist, dass die Platte sich in einer Richtung XX' (2) bewegen kann, die im Wesentlichen parallel zu der Drehachse xx' (1) des Drehteils ist.

19. Bearbeitungsvorrichtung gemäß Anspruch 18, bei der die Sohle (20) mit einer zweiten Gleitschiene (21) versehen ist, die in einer Richtung XX' (2) ausgerichtet ist, die im Wesentlichen parallel zu der Drehachse xx' (1) des Drehteils ist, und die Platte (12) mit einem zweiten Gleitelement (122) versehen ist, dessen Querschnitt eine zu derjenigen der zweiten Gleitschiene komplementäre Form aufweist, so dass es sich in der Richtung XX' (2) der zweiten Gleitschiene (21) bewegen kann.

20. Bearbeitungsvorrichtung gemäß Anspruch 18 oder 19, bei der die Bewegung entlang der Richtung YY' (3) des Drehzentrums (C) um ZZ', die Drehung des Werkzeugträgers (11) um die Achse ZZ' und die Bewegung in der Richtung XX' (2) der Platte (12) mit Hilfe von Motoren verwirklicht sind.

21. Bearbeitungsvorrichtung gemäß Anspruch 20, **dadurch gekennzeichnet**, das die Motoren gleichzeitig gesteuert werden, beispielsweise mittels eines Rechnerprogramms, um einem Ende des Schneidwerkzeugs (300) die gewünschte Bahn aufzuerlegen.
